# EUROPÄISCHE PATENTSCHRIFT

(11) **EP 3 755 941 B1**
(45) Veröffentlichungstag und Bekanntmachung des Hinweises auf die Patenterteilung: **09.03.2022**
(21) Anmeldenummer: 19702840.0
(22) Anmeldetag: 28.01.2019
(51) Int. Cl.: F21S 41/143, F21S 41/25, F21S 41/255, F21S 41/26, F21S 41/275, F21S 41/32, F21S 41/24, F21S 41/663

(54) **KRAFTFAHRZEUGSCHEINWERFER MIT LICHTLEITELEMENTEN ANGEORDNET IN MATRIXFORM**
MOTOR VEHICLE HEADLAMP WITH LIGHT GUIDES ARRANGED IN MATRIX FORM
PHARE DE VÉHICULE AUTOMOBILE AVEC GUIDES DE LUMIÈRE AGENCÉS EN MATRICE

(30) Priorität: 19.02.2018 EP 18157331
(43) Veröffentlichungstag der Anmeldung: 30.12.2020
(73) Patentinhaber: ZKW Group GmbH, 3250 Wieselburg (AT)
(72) Erfinder: TAUDT, Lukas, 3250 Wieselburg (AT); BRAUNER, Nina, 3033 Altlengbach (AT); HECHENBERGER, Josef, 5310 Mondsee (AT); KERN, Matthias, 3385 Prinzersdorf (AT); LÄNGAUER, Christoph, 3293 Lunz am See (AT); SCHRAGL, Mathias, 3261 Zarnsdorf (AT)
(74) Vertreter: Patentanwaltskanzlei Matschnig & Forsthuber OG
(86) Internationale Anmeldenummer: PCT/EP2019/052008
(87) Internationale Veröffentlichungsnummer: WO 2019/158348

(56) Entgegenhaltungen:
- EP-A1- 3 124 854
- EP-A2- 2 719 940
- WO-A1-2018/023141
- DE-A1- 10 302 969
- DE-A1-102011 077 636
- DE-A1-102014 007 185
- DE-B3-102009 053 581
- DE-B4- 10 302 969
- DE-U1-202017 005 367
- DE-U1-202017 005 367
- JP-A- 2009 238 469

## Beschreibung

Die Erfindung bezieht sich auf einen Kraftfahrzeugscheinwerfer mit einer Leuchteinheit, welche zumindest eine Lichtquelle und eine Vorsatzoptik mit einer Lichtaustrittsfläche aufweist, und mit einer der Leuchteinheit nachgeordneten Projektionsoptik, wobei die Vorsatzoptik mehrere Lichtleitelemente mit je einer Lichteinkoppelfläche zum Einspeisen von Licht der zumindest einen Lichtquelle und mit in der Lichtaustrittsfläche der Vorsatzoptik liegenden Lichtauskoppelflächen aufweist und nach vorne ein Lichtmuster in den Verkehrsraum projiziert, sich die Lichtleitelemente zwischen der Lichteinkoppelfläche und der Lichtauskoppelfläche erstrecken, wobei die Lichtauskoppelfläche eine größere Fläche besitzt als die Lichteinkoppelfläche, und jedes Lichtleitelement seitlich von zwei Seitenflächen, oben von einer Dachfläche und unten von einer Bodenfläche begrenzt und zwischen der Lichtaustrittsfläche und der Lichteinkoppelfläche verjüngt verlaufend ausgebildet ist, wobei die Breite der Bodenfläche und/oder der Dachfläche von der Lichtaustrittsfläche ausgehend abnimmt.

Ein Scheinwerfer dieser Art ist beispielsweise in der EP 2 719 940 A2 und in der eigenen WO 2013/166535 A2 gezeigt.

Wesentlich für ein praxistaugliches Lichtbild ist bei einem solchen Scheinwerfer die Ausbildung der Lichtleitelemente, in welchen das Licht durch Totalreflexion an den Begrenzungswänden geführt wird.

Eine Aufgabe der Erfindung besteht darin, bei einem Scheinwerfer der gegenständlichen Art die Formgebung der Lichtleitelemente vor allem hinsichtlich einer noch besseren Homogenität und maximalen Helligkeit des erzeugten Lichtbildes zu optimieren.

Diese Aufgabe wird mit einem Scheinwerfer der eingangs genannten Art gelöst, bei welchem die Bodenfläche und/oder die Dachfläche zumindest eines Lichtleitelements hinsichtlich ihrer Breite zwischen der Lichtaustrittsfläche und der Lichteinkoppelfläche genau eine Einschnürung aufweist, welche die minimalste Breite der Bodenfläche und/oder der Dachfläche besitzt.

Dank der Erfindung ergibt sich für jedes verwendete und erfindungsgemäß ausgebildete Lichtleitelement eine Lichtverteilung mit weniger störenden Bereichen aber einer höheren maximale Lichtstärke an der Lichtaustrittsfläche bzw. im erzeugten Lichtbild, sodass man es in der Hand hat, auch das gesamte, von der Mehrzahl der Lichtleitelemente erzeugte Lichtbild zu verbessern.

Bei einer lichttechnisch zweckmäßigen Weiterbildung kann vorgesehen sein, dass die Dachfläche über schmale Abkantungen beidseitig in die Seitenflächen übergeht.

Des Weiteren kann es empfehlenswert sein, wenn die Lichtleitelemente in einer matrixartigen Anordnung zusammengefasst sein.

Vorteilhaft kann es sein, wenn Lichtleitelemente einer untersten Reihe einer zumindest zweizeiligen Matrix von Lichtleitelementen eine Einschnürung aufweisen.

In anderen Fällen kann es empfehlenswert sein, wenn Lichtleitelemente einer obersten Reihe einer zumindest zweizeiligen Matrix von Lichtleitelementen eine Einschnürung aufweisen.

Vorteilhaft ist es, wenn die Lichtleitelemente in ihrem vorderen Bereich einstückig miteinander verbunden sind, da dies die Herstellung erleichtert und zu einer kompakten und stabilen Vorsatzoptik führt.

Dabei ist es sinnvoll, wenn die Lichtauskoppelflächen der Lichtleitelemente zu der Lichtaustrittsfläche der Vorsatzoptik zusammenfallen.

Bei einer praxisgerechten Ausbildung ist vorgesehen, dass die die Breite der Einschnürung 10 bis 80 % der Breite der Lichteinkoppelfläche beträgt.

In der Praxis erhält man besonders günstige Ergebnisse hinsichtlich des gewünschten Lichtbildes, falls die Einschnürung in der der Lichteinkoppelfläche nächstgelegenen Hälfte des Lichtleitelements ausgebildet ist.

Die Erfindung samt weiteren Vorteilen und ihren Unterschieden zum Stand der Technik ist im Folgenden auch an Hand von Ausführungsbeispielen näher erläutert und in der Zeichnung veranschaulicht. In dieser zeigen
Fig. 1 schematisch und in schaubildlicher Darstellung Komponenten eines Scheinwerfers, nämlich eine Leuchteinheit mit vorgesetztem Brennglasblech und einer Projektionslinse,
Fig. 2 in schaubildlicher Darstellung eine Vorsatzoptik, schräg von hinten in Richtung der Lichteinkoppelflächen der Lichtleitelemente gesehen,
Fig. 3 ein einzelnes Lichtleitelement nach der Erfindung, schräg von hinten in Richtung seiner Lichteinkoppelfläche gesehen,
Fig. 4 das Lichtleitelement der Fig. 3 in einer Ansicht von unten in Richtung seiner Bodenfläche gesehen,
Fig. 5 ein einzelnes Lichtleitelement nach dem Stand der Technik, schräg von hinten in Richtung seiner Lichteinkoppelfläche gesehen,
Fig. 6 das Lichtleitelement der Fig. 5 in einer Ansicht von unten in Richtung seiner Bodenfläche gesehen,
Fig. 7 eine beispielsweise Lichtverteilung eines Scheinwerfers nach der Erfindung,
Fig. 8 den Verlauf der Lichtstärke längs einer mittigen Linie der Fig. 7,
Fig. 9 eine beispielsweise Lichtverteilung eines Scheinwerfers nach dem Stand der Technik und
Fig. 10 den Verlauf der Lichtstärke längs einer mittigen Linie der Fig. 9.

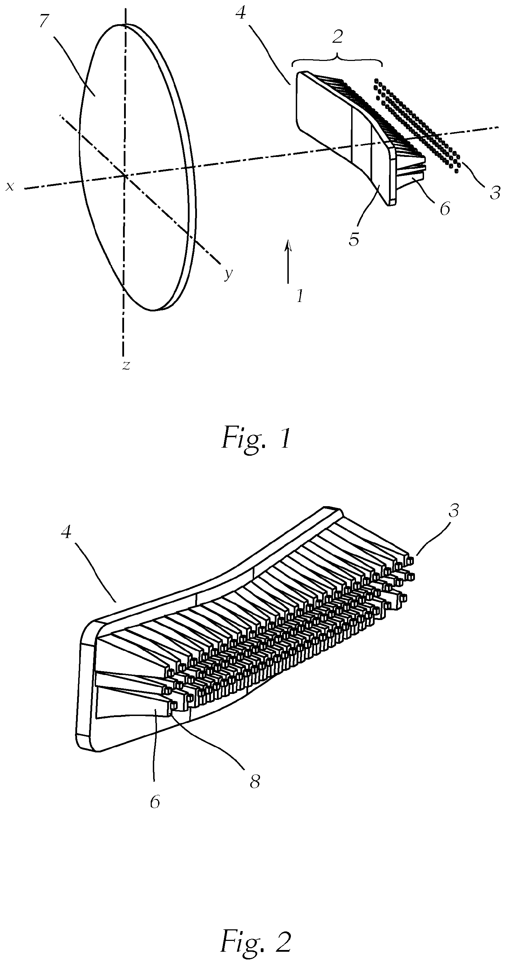

In der Darstellung nach Fig. 1 erkennt man in schematischer Ansicht einen Scheinwerfer 1 nach der Erfindung mit seinen für die Erläuterung der Erfindung wesentlichen Bestandteilen, wobei es für den Fachmann klar ist, dass ein Scheinwerfer eine Vielzahl weiterer, hier nicht gezeigter Bestandteile besitzt, wie Ein- und Verstelleinrichtungen, elektrische Versorgungsmittel, Blenden und vieles mehr. Wenn im Zusammenhang mit der Erfindung der Begriff "Scheinwerfer" verwendet wird, so soll dieser Begriff auch einzelne Projektionsmodule beinhalten, die auch in Kombination in einem übergeordneten Scheinwerfer enthalten sein können.

In diesen und den folgenden Figuren werden für gleiche oder vergleichbare Elemente zum Zwecke der einfacheren Erläuterung und Darstellung gleiche Bezugszeichen verwendet.

Die in den Ansprüchen verwendeten Bezugszeichen sollen lediglich die Lesbarkeit der Ansprüche und das Verständnis der Erfindung erleichtern und haben keinesfalls einen den Schutzumfang der Erfindung beeinträchtigenden Charakter.

Der Kraftfahrzeugscheinwerfer 1 besitzt eine Leuchteinheit 2, welche mehrere Lichtquellen, hier ein Array von Leuchtdioden, kurz LEDs 3, und eine Vorsatzoptik 4 mit einer Lichtaustrittsfläche 5 aufweist, wobei die Vorsatzoptik 4 eine Anzahl von Lichtleitelementen 6 umfasst. Die LEDs 3 strahlen ihr Licht in die lichtleitende Vorsatzoptik 4, welche nach vorne ein gewünschtes Lichtmuster abgibt. Dieses Lichtmuster wird mittels einer Projektionsoptik 7, die im vorliegenden Fall eine einstückige Linse ist, in den Verkehrsraum projiziert.

In der größeren Darstellung der Fig. 2 erkennt man eine beispielsweise Ausbildung der Vorsatzoptik 4 mit einer Vielzahl von Lichtleitelementen 6, die je eine Lichteinkoppelfläche 8 besitzen. Vorzugsweise ist jedem Lichtleitelement 6 genau eine Lichtquelle zugeordnet, insbesondere eine LED 3 oder mehrere LEDs. Es sollte klar sein, dass auch andere Lichtquellen als LEDs zur Anwendung kommen können. Bei der dargestellten beispielsweisen Ausführungsform der Leuchteinheit 2 sind die Lichtleitelemente 6 länglich ausgebildet, mit einer größeren Ausdehnung in Ausbreitungsrichtung des Lichtes als quer dazu. Sie bestehen vorzugsweise aus hochtransparenten, lichtleitenden und formbaren Kunststoffen, welche für die Herstellung von komplexen Geometrien gut geeignet sind. Besonders bevorzugt sind dabei Silikonmaterialien. Es ist jedoch auch die Verwendung von Gläsern möglich.

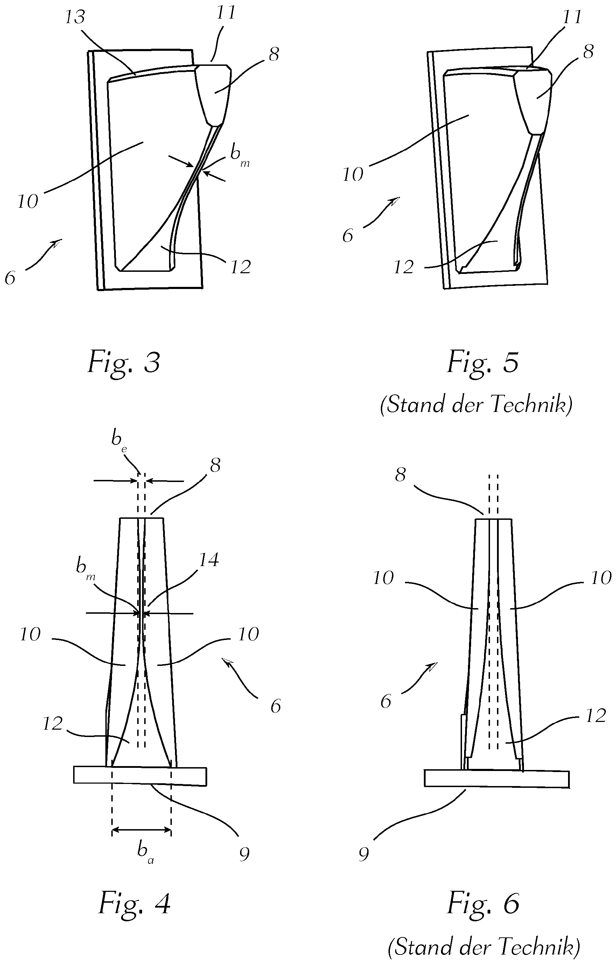

In den Fig. 3 und 4, welche ein einzelnes Lichtleitelement 6 in vergrößerter Darstellung zeigen, erkennt man die genauere Form der Lichtleitelemente 6. Diese weisen, ausgehend von Lichtauskoppelflächen 9 einen zu ihren Lichteinkoppelfläche 8 hin sich verjüngenden Querschnitt auf. Beispielsweise kann vorgesehen sein, dass die Lichtleitelemente 6 kegelstumpfförmig oder wie in den Figuren gezeigt annähernd trapezförmig ausgebildet sind.

In die Lichteinkoppelflächen 8 wird das Licht der zumindest einen Lichtquelle, hier der LEDs 3 eingespeist. Die Lichtauskoppelflächen 9 liegen in der Lichtaustrittsfläche 5 der Vorsatzoptik 4. Zufolge der angesprochenen Verjüngung besitzt die Lichtauskoppelfläche 9 eine größere Fläche als die Lichteinkoppelfläche 8. Seitlich ist das Lichtleitelement 6 von zwei Seitenflächen 10 begrenzt, oben von einer Dachfläche 11 und unten von einer Bodenfläche 12. Die Dachfläche 11 geht bei der gezeigten Ausführungsform über schmale Abkantungen 13 beidseitig in die Seitenflächen 10 über.

Wie aus den Fig. 3 und 4 ersichtlich, nimmt die Breite der Bodenfläche 12 von der Lichtauskoppelfläche 9 ausgehend zur Lichteinkoppelfläche 8 ab, jedoch nicht kontinuierlich, denn die Bodenfläche 12 weist hinsichtlich ihrer Breite zwischen der Lichtauskoppelfläche 9 und der Lichteinkoppelfläche 8 eine Einschnürung **14** auf, d.h. die Breite der Bodenfläche 12 nimmt, ausgehend von einer Breite **bₐ** der Lichtauskoppelfläche 9 bis zum Mittenbereich der Einschnürung 14 ab, wo die Breite **bₘ** am geringsten ist, und nimmt dann wieder in Richtung der Lichteinkoppelfläche 8 mit einer Breite **bₑ** zu. Anders ausgedrückt weist die Breite der Bodenfläche 12 zwischen der Lichtauskoppelfläche 9 und der Lichteinkoppelfläche 8 ein Minimum bₘ auf. Diese Ausbildung im Sinne der Erfindung führt zu einer verbesserten Lichtführung und zu einer Lichtverteilung, die weniger störende Bereiche aber eine höhere maximale Lichtstärke ergibt, was weiter unten noch gezeigt wird.

Um eine Vorstellung über mögliche Abmessungen zu geben, sei für ein praktisches Ausführungsbeispiel folgendes angegeben:
Lichtauskoppelfläche 7,7 mm², Lichteinkoppelfläche 1,5 mm², Länge des Lichtleitelements 15 mm, Breite bₐ 1,8 mm, Breite bₘ 0,3 mm, Breite bₑ 0,6 mm.

Bei dem dargestellten und oben beschriebenen Ausführungsbeispiel ist die Einschnürung 14 an der Bodenfläche 12 ausgebildet. Es ist aber auch möglich, sinngemäß eine Einschnürung an der Dachfläche 11 auszubilden, was besonders für das Lichtbild vorteilhaft ist, das von einer oberen Reihe einer matrixartig ausgestalteten Vorsatzoptik günstig ist. In diesem zuletzt genannten Fall kann vorgesehen sein, dass die Breite der Bodenfläche 12 ausgehend von der Lichteinkoppelfläche 8 bis zur Lichtauskoppelfläche 9 hin stetig abnimmt. Jedoch ist es auch möglich, dass eine Einschnürung 14 sowohl in der Dachfläche 11 als auch in der Bodenfläche 12 ausgebildet ist.

Generell zeigen sich besonders gute Ergebnisse, wenn die Breite bₘ der Einschnürung 14 10 bis 80 % der Breite bₑ der Lichteinkoppelfläche 8 beträgt. Außerdem erhält man besonders günstige Ergebnisse hinsichtlich des gewünschten Lichtbildes, falls die Einschnürung in der der Lichteinkoppelfläche nächstgelegenen Hälfte des Lichtleitelements ausgebildet ist.

Wie man den Fig. 1 und 2 weiters entnehmen kann, sind die Lichtleitelemente 6 matrixartig einstückig zusammengefasst, wobei ihre Lichtauskoppelflächen 9 zu der Lichtaustrittsfläche 5 der Vorsatzoptik 4 zusammenfallen. Die Lichtleitelemente 6 können auch zu mehreren Segmenten zusammengefasst sein, welche dann die Vorsatzoptik 4 bilden, wie in Fig. 1 und 2 mit drei Segmenten gezeigt. Dabei können die Lichtaustrittsflächen der einzelnen Segmente eben oder gekrümmt sein. Weiters kann in Abhängigkeit von dem benötigten Lichtbild auch vorgesehen sein, dass lediglich einzelne Lichtleitelemente 6 oder Gruppen von Lichtleitelementen 6 gemäß der Erfindung ausgebildet sind und der verbleibende Rest nach dem Stand der Technik ohne Einschnürung 14.

Die Lichtauskoppelflächen 9 der Lichtleitelemente 6 können zu einer gemeinsamen Lichtaustrittsfläche 5 der Vorsatzoptik 4 zusammenfallen. Die gemeinsame Lichtaustrittsfläche ist typischerweise eine gekrümmte Fläche, die üblicherweise der Petzval-Fläche der Abbildungsoptik (z.B. eine Abbildungslinse) folgt. Für bestimmte Anwendungen können aber auch bewusste Abweichungen in der Krümmung eingesetzt werden, um im Randbereich Abbildungsfehler zur Lichthomogenisierung zu nutzen.

Die einzelnen LEDs 3 bzw. ganz allgemein Lichtquellen können in bekannter Weise individuell angesteuert werden, um ein jeweils gewünschtes Lichtbild zu erzeugen, das sich auch dynamisch ändern kann.

Der Begriff Matrix soll im Rahmen der gegenständlichen Anmeldung auch für den Extremfall gelten bei welchem die Matrix einzeilig ist, somit nur eine Reihe von Lichtleitelementen vorhanden ist, was in der Kraftfahrzeug-Beleuchtungstechnik durchaus Sinn macht. Ist die Matrix mehrzeilig, so kann mit Vorteil vorgesehen werden, dass Lichtleitelemente 6 einer untersten Reihe (Zeile) von Lichtleitelementen oder Lichtleitelemente 6 einer obersten Reihe eine Einschnürung 14 aufweisen. Natürlich kann auch eine unterste Reihe und eine oberste Reihe entsprechende Lichtleitelemente aufweisen, wobei anzumerken ist, dass nicht notwendigerweise sämtliche Lichtleitelemente einer Reihe (Zeile) gleich gestaltet sein müssen bzw. eine Einschnürung besitzen müssen.

Erfahrungsgemäß ist der Aufbau eines Scheinwerfers bzw. Scheinwerfermoduls mit matrixartiger Anordnung besonders effizient, wenn die Lichtleitelemente in genau drei übereinander angeordneten Reihen angeordnet sind, die gemeinsam eine Fernlichtverteilung bilden. Bei einer solchen Anordnung kann die obere Reihe als Vorfeldreihe, die mittlere Reihe als Asymmetriereihe und die untere Reihe als Fernlichtreihe ausgebildet sein, wobei die Fernlichtreihe aus Fernlicht-Lichtleitelementen mit Einschnürungen der gegenständlichen Art versehen ist.

Bei sogenannten Pixel-Fernlicht-Modulen können alle Fernlicht-Lichtleitelemente in genau einer Reihe angeordnet und mit Einschnürungen ausgebildet sein. Zweckmäßigerweise ist die unterste Reihe die Fernlicht-Reihe (oder "Zeile").

In den Fig. 5 und 6 sind in der Zeichnung sinngemäße Abbildungen eines Lichtleitelements nach dem Stand der Technik gezeigt, damit die Einschnürung 14 nach der Erfindung, welche dem Stand der Technik fremd ist, besser erkannt werden kann.

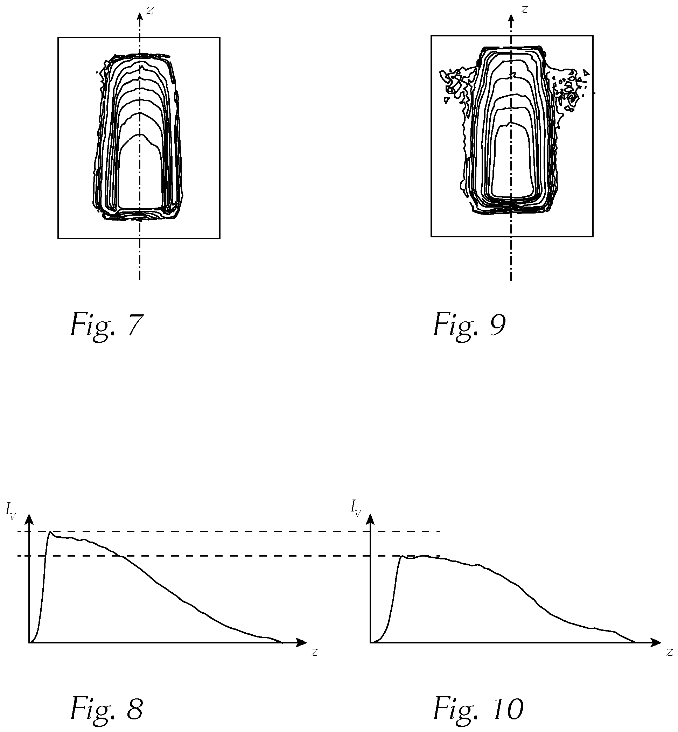

Die nun folgende Erläuterung zur Gegenüberstellung der Fig. 7 und 8 bzw. 9 und 10 macht die Vorteile der Erfindung deutlicher.

Fig. 7 zeigt eine beispielsweise Lichtverteilung eines einzelnen Lichtleitelements, das gemäß der Erfindung ausgebildet ist, mit eingezeichneten Linien gleicher Lichtstärke und Fig. 8 zeigt den Verlauf der Lichtstärke Iv längs der eingezeichneten mittigen Linie z der Fig. 7, wobei die linke Seite des Diagramms dem unteren Bereich der Fig. 7 entspricht.

Fig. 9 entspricht der Darstellung der Fig. 7, jedoch für ein Lichtleitelement nach dem Stand der Technik, wie in Fig. 5 und 6 dargestellt. Man erkennt unerwünschte Streulichtbereiche beidseitig des gewünschten Lichtbilds, die sich bei dem Lichtleitelement nach der Erfindung nicht finden, wie die gegenübergestellte Fig. 7 zeigt.

In Fig. 10, welche dem Diagramm der Fig. 8, jedoch für ein Lichtleitelement nach dem Stand der Technik entspricht, erkennt man, dass der Lichtstärkeverlauf eine geringere maximale Lichtstärke aufweist, als jener eines Lichtleitelements nach der Erfindung, wie die gegenübergestellte Fig. 8 zeigt.

Mit einem Scheinwerfer der gezeigten Art kann beispielsweise ein Abblendlicht oder ein Fernlicht erzeugt werden, wozu beispielsweise der linke Scheinwerfer und der rechte Scheinwerfer je als erfindungsgemäßer Scheinwerfer ausgebildet sind, mit welcher je der linke bzw. rechte Teil der Lichtverteilung erzeugt werden. Andererseits können der linke und der rechte Scheinwerfer auch identische Lichtbilder erzeugen, die sich auf der Straße überlagern.

**Liste der Bezugszeichen**

| | | | |
|---|---|---|---|
| 1 | Kraftfahrzeugscheinwerfer | bₐ | Breite |
| 2 | Leuchteinheit | bₑ | Breite |
| 3 | LEDs | bₘ | Breite |
| 4 | Vorsatzoptik | | |
| 5 | Lichtaustrittsfläche | | |
| 6 | Lichtleitelemente | | |
| 7 | Projektionsoptik | | |
| 8 | Lichteinkoppelfläche | | |
| 9 | Lichtauskoppelfläche | | |
| 10 | Seitenflächen | | |
| 11 | Dachfläche | | |
| 12 | Bodenfläche | | |
| 13 | Abkantungen | | |
| 14 | Einschnürung | | |

## Patentansprüche

1. Kraftfahrzeugscheinwerfer (1) mit einer Leuchteinheit (2), welche zumindest eine Lichtquelle (3) und eine Vorsatzoptik (4) mit einer Lichtaustrittsfläche (5) aufweist, und mit einer der Leuchteinheit nachgeordneten Projektionsoptik (7), wobei die Vorsatzoptik mehrere Lichtleitelemente (6) mit je einer Lichteinkoppelfläche (8) zum Einspeisen von Licht der zumindest einen Lichtquelle und mit in der Lichtaustrittsfläche der Vorsatzoptik liegenden Lichtauskoppelflächen (9) aufweist und nach vorne in den Verkehrsraum projiziert, sich die Lichtleitelemente zwischen der Lichteinkoppelfläche und der Lichtauskoppelfläche erstrecken, wobei die Lichtauskoppelfläche eine größere Fläche besitzt als die Lichteinkoppelfläche, und jedes Lichtleitelement seitlich von zwei Seitenflächen (10), oben von einer Dachfläche (11) und unten von einer Bodenfläche (12) begrenzt und zwischen der Lichtauskoppelfläche und der Lichteinkoppelfläche verjüngt verlaufend ausgebildet ist, wobei die Breite der Bodenfläche/ und oder der Dachfläche von der Lichtaustrittsfläche ausgehend abnimmt,
**dadurch gekennzeichnet, dass**
die Bodenfläche (12) und/oder die Dachfläche (11) zumindest eines Lichtleitelements (6) hinsichtlich ihrer Breite zwischen der Lichtauskoppelfläche (9) und der Lichteinkoppelfläche (8) genau eine Einschnürung (14) aufweist, welche die minimalste Breite (bₘ) der Bodenfläche und/oder der Dachfläche besitzt.

2. Kraftfahrzeugscheinwerfer (1) nach Anspruch 1, **dadurch gekennzeichnet, dass** die Dachfläche (11) und/oder die Bodenfläche (12) über schmale Abkantungen (13) beidseitig in die Seitenflächen (10) übergeht.

3. Kraftfahrzeugscheinwerfer (1) nach Anspruch 1 oder 2, **dadurch gekennzeichnet, dass** die Lichtleitelemente (6) in einer matrixartigen Anordnung zusammengefasst sind.

4. Kraftfahrzeugscheinwerfer (1) nach Anspruch 3, **dadurch gekennzeichnet, dass** Lichtleitelemente (6) einer untersten Reihe einer zumindest zweizeiligen Matrix von Lichtleitelementen eine Einschnürung (14) aufweisen.

5. Kraftfahrzeugscheinwerfer (1) nach Anspruch 3, **dadurch gekennzeichnet, dass** Lichtleitelemente (6) einer obersten Reihe einer zumindest zweizeiligen Matrix von Lichtleitelementen eine Einschnürung (14) aufweisen.

6. Kraftfahrzeugscheinwerfer (1) nach einem der Ansprüche 1 bis 5, **dadurch gekennzeichnet, dass** Lichtleitelemente (6) in ihrem vorderen Bereich einstückig miteinander verbunden sind.

7. Kraftfahrzeugscheinwerfer (1) nach Anspruche 3 bis 6, **dadurch gekennzeichnet, dass** die Lichtauskoppelflächen (9) der Lichtleitelemente (6) zu der Lichtaustrittsfläche (5) der Vorsatzoptik (4) zusammenfallen.

8. Kraftfahrzeugscheinwerfer (1) nach einem der Ansprüche 1 bis 7, **dadurch gekennzeichnet, dass** die Breite (bₘ) der Einschnürung (14) 10 bis 80 % der Breite (bₑ) der Lichteinkoppelfläche (8) beträgt.

9. Kraftfahrzeugscheinwerfer (1) nach einem der Ansprüche 1 bis 8, **dadurch gekennzeichnet, dass** die Einschnürung (14) in der der Lichteinkoppelfläche (8) nächstgelegenen Hälfte des Lichtleitelements (6) ausgebildet ist.

## Claims

1. Motor vehicle headlamp (1) comprising a lighting unit (2) which has at least one light source (3) and auxiliary optics (4) having a light exit surface (5), and comprising projection optics (7) arranged downstream of the lighting unit, the auxiliary optics comprising a plurality of light guide elements (6) each having a light input surface (8) for feeding in light from the at least one light source and light output surfaces (9), located in the light output surface of the auxiliary optics, being projected forward towards the traffic area, the light guide elements extending between the light input surface and the light output surface, the light output surface having a larger area than the light input surface, and each light guide element being laterally bounded by two lateral surfaces (10), at the top by a top surface (11) and at the bottom by a base surface (12), and formed tapering between the light output surface and the light input surface, the width of the base surface and/or the top surface decreasing starting from the light output surface,
**characterized in that**
the base surface (12) and/or the top surface (11) of at least one light guide element (6) has, with respect to its width between the light output surface (9) and the light input surface (8), exactly one constriction (14) which has the minimum width (bₘ) of the base surface and/or the top surface.

2. Motor vehicle headlamp (1) according to claim 1, **characterized in that** the top surface (11) and/or the base surface (12) merge into the lateral surfaces (10) via narrow chamfers (13) on both sides.

3. Motor vehicle headlamp (1) according to claim 1 or 2, **characterized in that** the light guide elements (6) are aggregated in a matrix-like arrangement.

4. Motor vehicle headlamp (1) according to claim 3, **characterized in that** light guide elements (6) of a lowermost row of a matrix of at least two rows of light guide elements have a constriction (14).

5. Motor vehicle headlamp (1) according to claim 3, **characterized in that** light guide elements (6) of an uppermost row of a matrix of at least two rows of light guide elements have a constriction (14).

6. Motor vehicle headlamp (1) according to any one of claims 1 to 5, **characterized in that** light guide elements (6) are integrally joined in their front region.

7. Motor vehicle headlamp (1) according to any one of claims 3 to 6, **characterized in that** the light output surfaces (9) of the light guide elements (6) coincide with the light output surface (5) of the auxiliary optics (4).

8. Motor vehicle headlamp (1) according to any one of claims 1 to 7, **characterized in that** the width (bₘ) of the constriction (14) is 10 to 80 % of the width (bₑ) of the light input surface (8).

9. Motor vehicle headlamp (1) according to any one of claims 1 to 8, **characterized in that** the constriction (14) is formed in the half of the light guide element (6) next to the light input surface (8).

## Revendications

1. Projecteur de véhicule (1) comportant une unité d'éclairage (2) qui comprend au moins une source lumineuse (3) et une optique additionnelle (4) comportant une surface de sortie de lumière (5), et comportant une optique de projection (7) disposée en aval de l'unité d'éclairage, l'optique additionnelle comprend plusieurs éléments de guidage de la lumière (6), chacun comportant une surface de couplage de la lumière (8) pour l'injection de la lumière de ladite au moins une source lumineuse et comportant des surfaces de découplage de la lumière (9) situées dans la surface de sortie de la lumière de l'optique additionnelle et la projetant vers l'avant dans l'espace de circulation, les éléments de guidage de la lumière s'étendant entre la surface de couplage de la lumière et la surface de découplage de la lumière, la surface de découplage de la lumière ayant une surface plus grande que la surface de couplage de la lumière, et chaque élément de guidage de la lumière étant délimité latéralement par deux surfaces latérales (10), en haut par une surface supérieure (11) et en bas par une surface inférieure (12) et s'étendant en se rétrécissant entre la surface de découplage de la lumière et la surface de couplage de la lumière, la largeur de la surface inférieure et/ou de la surface supérieure diminuant à partir de la surface de sortie de la lumière,
**caractérisé en ce que**
la surface inférieure (12) et/ou la surface supérieure (11) d'au moins un élément de guidage de lumière (6) présente, en ce qui concerne sa largeur entre la surface de découplage de lumière (9) et la surface de couplage de lumière (8), exactement un rétrécissement (14) qui a la largeur minimale (bₘ) de la surface inférieure et/ou de la surface supérieure.

2. Projecteur de véhicule (1) selon la revendication 1, **caractérisé en ce que** la surface supérieure (11) et/ou la surface inférieure (12) se prolonge par des pliages étroits (13) des deux côtés dans les surfaces latérales (10).

3. Projecteur de véhicule (1) selon la revendication 1 ou 2, **caractérisé en ce que** les éléments de guidage de lumière (6) sont réunis dans un agencement de type matriciel.

4. Projecteur de véhicule (1) selon la revendication 3, **caractérisé en ce que** des éléments de guidage de lumière (6) d'une rangée la plus basse d'une matrice d'au moins deux lignes d'éléments de guidage de lumière présentent un rétrécissement (14).

5. Projecteur de véhicule (1) selon la revendication 3, **caractérisé en ce que** des éléments de guidage de lumière (6) d'une rangée supérieure d'une matrice d'au moins deux lignes d'éléments de guidage de lumière présentent un rétrécissement (14).

6. Projecteur de véhicule (1) selon l'une quelconque des revendications 1 à 5, **caractérisé en ce que** des éléments de guidage de lumière (6) sont reliés entre eux d'un seul tenant dans leur partie avant.

7. Projecteur de véhicule (1) selon l'une quelconque des revendications 3 à 6, **caractérisé en ce que** les surfaces de découplage de lumière (9) des éléments de guidage de lumière (6) coïncident avec la surface de sortie de lumière (5) de l'optique rapportée (4).

8. Projecteur de véhicule (1) selon revendications 1 à 7, **caractérisé en ce que** la largeur (bₘ) du rétrécissement (14) est comprise entre 10 et 80 % de la largeur (bₑ) de la surface de couplage de la lumière (8).

9. Projecteur de véhicule (1) selon l'une quelconque des revendications 1 à 8, **caractérisé en ce que** le rétrécissement (14) est formé dans la moitié de l'élément de guidage de lumière (6) plus proche de la surface de couplage de lumière (8).
